# EUROPÄISCHE PATENTANMELDUNG

(11) **EP 3 090 891 A1**
(43) Veröffentlichungstag der Anmeldung: **09.11.2016**
(21) Anmeldenummer: 16164897.7
(22) Anmeldetag: 12.04.2016
(51) Int. Cl.: B60J 1/20

(54) **BESCHATTUNGSVORRICHTUNG FÜR EINE SCHEIBE EINES KRAFTFAHRZEUGS**

(30) Priorität: 06.05.2015 DE 102015208441
(71) Anmelder: BOS GmbH & Co. KG, 73760 Ostfildern (DE)
(72) Erfinder: Meier, Horst, 70794 Filderstadt (DE)
(74) Vertreter: Patentanwälte Ruff, Wilhelm, Beier, Dauster & Partner mbB

(57) **Zusammenfassung**

Eine derartige Beschattungsvorrichtung mit einem Beschattungsgebilde, das zwischen einer abgesenkten Ruhestellung und einer ausgefahrenen Beschattungsstellung in fahrzeugfesten seitlichen Führungsschienen verlagerbar ist, wobei das Beschattungsgebilde durch einen Durchtritt hindurch in einen Aufnahmeschacht absenkbar ist, wobei der Durchtritt mittels eines schwenkbeweglich gelagerten Schließdeckels verschließbar ist, und wobei eine Steuermechanik vorgesehen ist, um den Schließdeckel abhängig von einer Bewegung von Antriebsübertragungsmitteln in eine Öffnungsstellung zu überführen, ist bekannt.

Erfindungsgemäß weist die Steuermechanik einen Steuerschieber auf, der quer zur Verlagerungsrichtung des Beschattungsgebildes beweglich gelagert ist und mit dem Schließdeckel in mechanischer Wirkverbindung steht, und die Steuermechanik umfasst eine Umlenkeinrichtung, die den Steuerschieber bei einer Bewegung der Antriebsübertragungsmittel derart mit wenigstens einem Antriebsübertragungsmittel koppelt, dass der Steuerschieber bei einer Bewegung der Antriebsübertragungsmittel aus der Ruhestellung des Beschattungsgebildes in Richtung der Beschattungsstellung den Schließdeckel in die Öffnungsstellung überführt.

Einsatz für Seitenscheiben von Personenkraftwagen

## Beschreibung

Die Erfindung betrifft eine Beschattungsvorrichtung für eine Scheibe eines Kraftfahrzeugs mit einem Beschattungsgebilde, das zwischen einer abgesenkten Ruhestellung und einer ausgefahrenen Beschattungsstellung in betriebsfertig montiertem Zustand in fahrzeugfesten seitlichen Führungsschienen mithilfe von in den Führungsschienen beweglich geführten Antriebsübertragungsmitteln verlagerbar ist, wobei das Beschattungsgebilde durch einen Durchtritt hindurch in einen in betriebsfertig montiertem Zustand fahrzeugfesten Aufnahmeschacht absenkbar ist, wobei der Durchtritt mittels eines schwenkbeweglich gelagerten Schließdeckels verschließbar ist, und wobei eine Steuermechanik vorgesehen ist, um den Schließdeckel abhängig von einer Bewegung der Antriebsübertragungsmittel in eine Öffnungsstellung zu überführen.

Eine derartige Beschattungsvorrichtung ist aus der DE 10 2012 019 903 A1 bekannt. Die Beschattungsvorrichtung ist für eine Seitenscheibe eines Personenkraftwagens vorgesehen und weist ein flexibles Beschattungsgebilde in Form eines Rollostoffes auf. Das Beschattungsgebilde ist in einer abgesenkten Ruhestellung in einer Rollokassette aufnehmbar, die unterhalb einer Unterkante eines Scheibenrahmens der Seitenscheibe fahrzeugfest angebracht ist. Das Beschattungsgebilde ist in eine Beschattungsstellung ausfahrbar. In der Rollokassette ist das Beschattungsgebilde auf einer Rollowelle auf- und abwickelbar gehalten, die in der Rollokassette drehbar gelagert ist. Ein in Ausfahrrichtung vorderer Stirnendbereich des Beschattungsgebildes ist zwischen zwei seitlichen Mitnehmern gespannt gehalten, die in fahrzeugfesten Führungsschienen seitlich des Scheibenrahmens fahrzeugfest angeordnet sind. Zur Verlagerung der Mitnehmer sind in den Führungsschienen Antriebsübertragungsmittel in Form von Flexwellen gelagert, die über eine Antriebseinheit angetrieben werden. Das Beschattungsgebilde wird durch einen Durchtrittsschlitz im Bereich einer Oberseite der Rollokassette aus einer Türverkleidung der Seitentür nach oben ausgefahren. Dieser Durchtrittsschlitz ist durch einen schwenkbeweglich gelagerten Schließdeckel verschließbar. Der Schließdeckel ist mittels einer Federeinrichtung permanent in Öffnungsrichtung beaufschlagt. Eine Steuermechanik dient dazu, den Schließdeckel geschlossen zu halten, solange das Beschattungsgebilde sich in seiner in der Rollokassette angeordneten Ruhestellung befindet. Die Steuermechanik übernimmt zudem ein Öffnen des Schließdeckels abhängig von einer Verlagerungsbewegung der Mitnehmer längs der seitlichen Führungsschienen aus der Ruhestellung des Beschattungsgebildes heraus. Die Steuermechanik steuert zudem den Schließdeckel auch wieder in seine Schließstellung, sobald das Beschattungsgebilde aus seiner Beschattungsstellung heraus wieder in die Ruhestellung überführt wird. Die Steuermechanik weist einen Mitnehmergleitstein auf, der über eine zweite Federeinrichtung an dem Schließdeckel angreift. Bei einer Verlagerung der Flexwellen nimmt wenigstens ein Mitnehmer den Mitnehmergleitstein mit, der über die zweite Federvorrichtung auf den Schließdeckel einwirkt.

Aufgabe der Erfindung ist es, eine Beschattungsvorrichtung der eingangs genannten Art zu schaffen, die ein zuverlässiges Öffnen und Schließen des Schließdeckels ermöglicht.

Diese Aufgabe wird dadurch gelöst, dass die Steuermechanik einen Steuerschieber aufweist, der quer zur Verlagerungsrichtung des Beschattungsgebildes beweglich gelagert ist und mit dem Schließdeckel in mechanischer Wirkverbindung steht, und dass die Steuermechanik eine Umlenkeinrichtung umfasst, die den Steuerschieber bei einer Bewegung der Antriebsübertragungsmittel derart mit wenigstens einem Antriebsübertragungsmittel koppelt, dass der Steuerschieber bei einer Bewegung der Antriebsübertragungsmittel aus der Ruhestellung des Beschattungsgebildes in Richtung der Beschattungsstellung den Schließdeckel in die Öffnungsstellung überführt. Dadurch, dass der Steuerschieber quer zur Verlagerungsrichtung des Beschattungsgebildes beweglich gelagert ist und mittels der Umlenkeinrichtung aktiviert wird, ist es möglich, einen Angriff an dem Schließdeckel in Abstand zu seinem entsprechenden Seitenrand vorzusehen, der zu den fahrzeugfesten Führungsschienen benachbart ist. Dieser im Vergleich zum Stand der Technik zentralere Angriff an dem Schließdeckel, um diesen zu verschwenken, ermöglicht ein Öffnen und Schließen des Schließdeckels mittels eines einzelnen Steuer-schiebers, ohne dass der Schließdeckel beim Öffnen oder Schließen zu starken Torsionen unterworfen ist, wie dies bei einem seitlichen Angriff der Steuermechanik an dem Schließdeckel der Fall wäre. Die erfindungsgemäße Lösung ist vorteilhaft, da üblicherweise die Schließdeckel eine relativ große Länge und eine relativ geringe Breite bzw. Tiefe aufweisen. Denn der entsprechende Durchtritt, den der Schließdeckel verschließt, weist ebenfalls eine relativ große Länge und eine relativ geringe Breite auf. Ein seitlicher Angriff an dem Schließdeckel würde daher zu Verwindungen, d.h. zu Torsionen, des Schließdeckels führen können, die auf Dauer eine bleibende Verformung des Schließdeckels bewirken würden. Dies kann zu Fehlfunktionen des Schließdeckels und zu qualitativ nachteiligen Ausrichtungen des Schließdeckels relativ zu dem entsprechenden Durchtritt führen. Die erfindungsgemäße Lösung wird vorteilhaft im Bereich von Seitenscheiben oder im Bereich von Heckscheiben von Kraftfahrzeugen, insbesondere bei Personenkraftwagen, aber auch bei Omnibussen oder Schienenfahrzeugen eingesetzt.

In Ausgestaltung der Erfindung umfasst die Steuermechanik eine Federeinheit, die auf den Steuerschieber eine permanente Federkraft in Richtung einer Endstellung ausübt, die den Schließdeckel in seiner Öffnungsstellung hält. In weiterer Ausgestaltung ist dem Schließdeckel eine Schließfedereinrichtung zugeordnet, die auf den Schließdeckel ein permanentes Drehmoment in Schließrichtung ausübt. Die auf den Steuerschieber permanent wirkende Federkraft führt dazu, dass der Steuerschieber den Schließdeckel in seiner Öffnungsstellung hält, solange das Beschattungsgebilde nicht vollständig in seine Ruhestellung eingefahren ist. Dadurch wird eine permanente mechanische Stützung des Schließdeckels durch den Steuerschieber erzielt, so dass ein Zurückschwenken des Schließdeckels in die Schließstellung vermieden wird, solange der Steuerschieber nicht durch die Steuermechanik wieder in seine Ausgangsstellung zurückbewegt wird. Die permanente Federkraft gewährleistet zudem eine klapperfreie Positionierung des Steuerschiebers in seiner Endstellung. Die Schließfedereinrichtung, die auf den Schließdeckel wirkt, gewährleistet, dass der Schließdeckel automatisch wieder in seine Schließstellung zurückgeschwenkt wird, sobald die Stützung durch den Steuerschieber aufgehoben ist. Die Schließfedereinrichtung gewährleistet zudem, dass der Schließdeckel in der Schließstellung federbelastet ist, so dass zum einen ebenfalls eine klapperfreie Sicherung des Schließdeckels vorhanden ist und zum anderen die auf den Schließdeckel wirkende Vorspannung etwaige Verwindungen oder Verformungen des Schließdeckels ausgleicht, so dass der Schließdeckel über seine gesamte Länge gleichmäßig und sicher den Durchtritt verschließen kann. Die Federeinheit wird durch wenigstens ein Zugfedermittel, vorzugsweise durch eine Schraubenzugfeder, gebildet.

In weiterer Ausgestaltung der Erfindung weist die Umlenkeinrichtung ein durch einen Mitnehmer des Antriebsübertragungsmittels betätigbares Steuerglied auf, das mit dem Steuerschieber gekoppelt ist. Der Mitnehmer des Antriebsübertragungsmittels steuert das Steuerglied bei einer entsprechenden Bewegung des Antriebsübertragungsmittels, um das Beschattungsgebilde in Richtung seiner Beschattungsstellung oder in Richtung seiner Ruhestellung zu bewegen.

In weiterer Ausgestaltung der Erfindung ist das Steuerglied als Schwenkhebel ausgeführt, der mittels eines Längenausgleichselements mit dem Steuerschieber gekoppelt ist. Das Längenausgleichselement ist dazu vorgesehen, eine gleichmäßige Kraftübertragung zwischen dem schwenkbeweglichen Schwenkhebel und dem linearbeweglichen Steuerschieber zu bewirken.

In vorteilhafter Weise ist das Längenausgleichselement als Langlochführung gestaltet. Bei dieser Ausgestaltung ist ein Hebelarm des Schwenkhebels über die Langlochführung mit dem Steuerschieber gekoppelt.

In weiterer Ausgestaltung der Erfindung ist die Federeinheit als Schraubenzugfeder gestaltet. Es können auch andere Zugfedermittel sein. In vorteilhafter Weise greift die Schraubenzugfeder an dem Steuerglied an. Dabei ist die Schraubenzugfeder vorteilhaft an einem Ende fahrzeugfest angeordnet. Mit dem anderen Ende greift die Schraubenzugfeder an dem Steuerglied an, vorzugsweise an einem entsprechenden Hebelarm des Schwenkhebels, derart, dass der Schwenkhebel in einer Drehrichtung federbelastet ist, die auf den Steuerschieber eine Axialkraft in Richtung der Öffnungsstellung des Schließdeckels ausübt.

In weiterer Ausgestaltung der Erfindung ist der Steuerschieber in einem Führungskanal linearbeweglich gelagert, der ortsfest zu dem Aufnahmeschacht angeordnet ist. Hierdurch ist eine besonders stabile und gleichmäßige Linearführung für den Steuerschieber erzielbar. Der Steuerschieber kann in dem Führungskanal, insbesondere am Kassettengehäuse, vormontiert sein, bevor der Führungskanal, insbesondere das Kassettengehäuse, fahrzeugseitig befestigt wird. Der Führungskanal weist vorzugsweise einen Längsschlitz auf, durch den ein Steuernocken des Steuerschiebers hindurchragt, um mit dem Schließdeckel zusammenzuwirken.

In weiterer Ausgestaltung der Erfindung wirkt der Steuerschieber mit einer an dem Schließdeckel angeordneten Steuerkulisse zusammen, um den Schließdeckel aus einer Schließstellung in die Öffnungsstellung zu überführen. Die Steuerkulisse ist vorzugsweise einstückig an dem Schließdeckel angeformt.

In weiterer Ausgestaltung der Erfindung ist der Steuerschieber parallel zu einer Drehachse des Schließdeckels linearbeweglich gelagert. Alternativ kann der Steuerschieber auch koaxial zu der Drehachse des Schließdeckels linearbeweglich gelagert sein.

In weiterer Ausgestaltung der Erfindung weist die Steuerkulisse eine Anlaufschräge auf, mit der eine Anlagefläche des Steuerschiebers zusammenwirkt. Hierzu weist der Steuerschieber vorzugsweise einen Steuernocken auf, der die Anlagefläche bildet, die mit der Anlaufschräge der Steuerkulisse zusammenwirkt.

In weiterer Ausgestaltung der Erfindung verläuft die Anlaufschräge zu einer Bewegungsbahn des Steuerschiebers geneigt. Eine Verlagerung des Steuerschiebers führt hierdurch zwangsläufig zu einer Einleitung eines Drehmoments auf den Schließdeckel.

In weiterer Ausgestaltung der Erfindung ist die Steuerkulisse zumindest weitgehend mittig zwischen gegenüberliegenden Seitenrandbereichen des Schließdeckels angeordnet. Die Formulierung "zumindest weitgehend" bedeutet, dass die Steuerkulisse in einem mittleren Bereich des Schließdeckels angeordnet ist, der vorzugsweise einem Drittel der Länge des Schließdeckels entspricht, so dass zu beiden Seiten des mittleren Bereichs zwei seitliche Bereiche des Schließdeckels verbleiben, die jeweils ebenfalls ein Drittel der Länge des Schließdeckels ausmachen.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform einer erfindungsgemäßen Beschattungsvorrichtung in betriebsfertig montiertem Zustand im Bereich einer Seitentür eines Personenkraftwagens,
- Fig. 2: schematisch in perspektivischer Darstellung einen Ausschnitt der Beschattungsvorrichtung nach Fig. 1,
- Fig. 3: die Beschattungsvorrichtung nach Fig. 2 in einer anderen Funktionsstellung,
- Fig. 4: eine andere perspektivische Darstellung der Beschattungsvorrichtung nach Fig. 3,
- Fig. 5: die Darstellung nach Fig. 4 in einer Schließstellung eines Schließdeckels,
- Fig. 6: eine Seitenansicht der Beschattungsvorrichtung nach Fig. 5,
- Fig. 7: in teilweise geschnittener Darstellung die Beschattungsvorrichtung nach den Fig.2 bis 6,
- Fig. 8: eine ungeschnittene Ansicht der Beschattungsvorrichtung gemäß Fig. 7,
- Fig. 9: eine von einer gegenüberliegenden Seite her betrachtete Schnittdarstellung analog Fig. 7 und
- Fig. 10: eine Schnittdarstellung gemäß Fig. 9 in einer anderen Funktionsstellung des Schließdeckels.

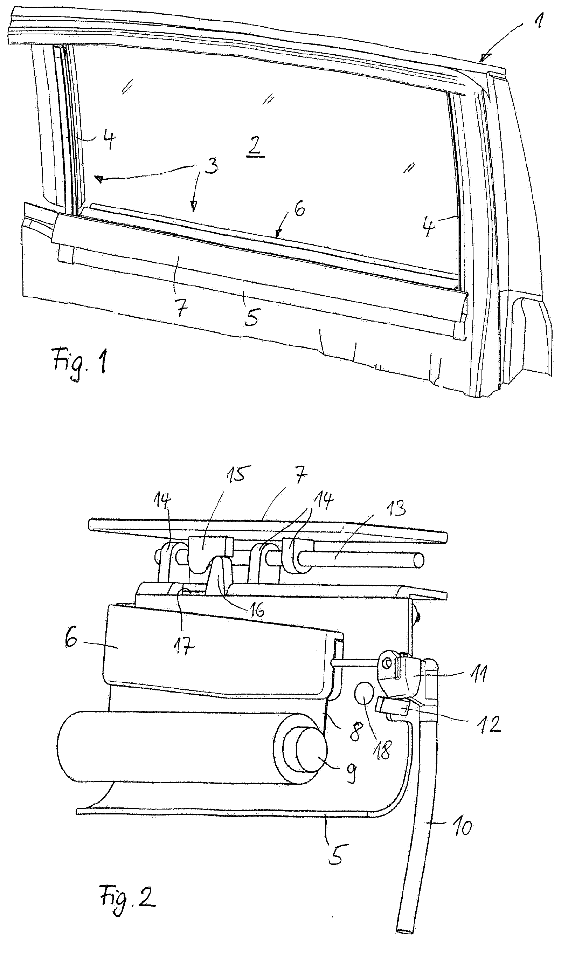

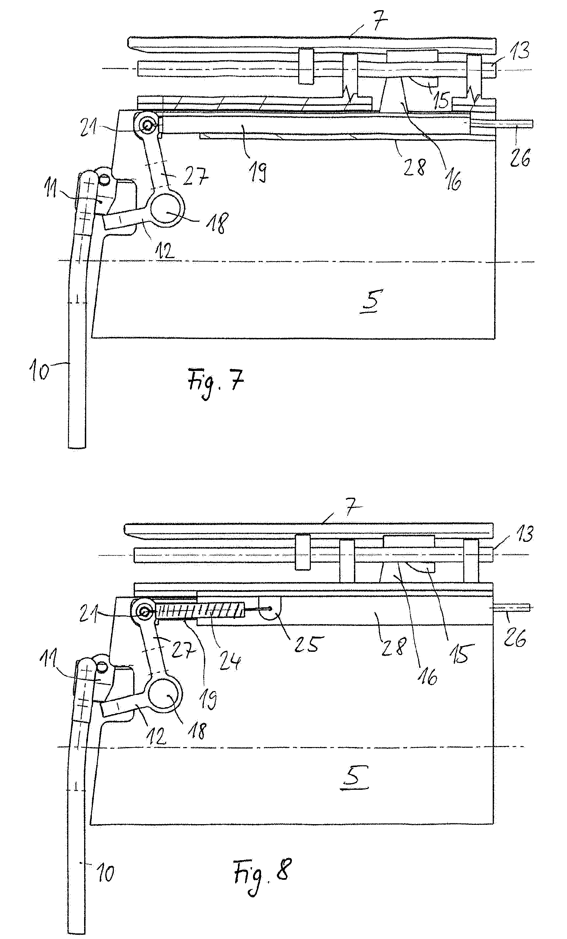

Eine Beschattungsvorrichtung 3 nach den Fig. 1 bis 10 ist für eine Seitenscheibe 2 einer Seitentür 1 eines Personenkraftwagens vorgesehen. Die Beschattungsvorrichtung 3 wird von einem Fahrzeuginnenraum her an der Seitentür 1 montiert. Die Beschattungsvorrichtung 3 weist an gegenüberliegenden, in Fahrzeughochrichtung erstreckten Seiten der Seitenscheibe 2 jeweils eine Führungsschiene 4 auf, die türfest an einem entsprechenden Scheibenrahmen montiert sind. Die Seitenscheibe 2 dient dazu, einen Öffnungsbereich in einem Türrahmen der Seitentür 1 zu verschließen oder freizugeben. Die Führungsschienen 4 sind an entsprechenden seitlichen Rahmenbereichen des Türrahmens befestigt. Im Bereich einer Fahrzeugbrüstung, d.h. an einer unteren, in Fahrzeuglängsrichtung erstreckten Begrenzung der durch die Seitenscheibe 2 verschlossenen Türöffnung, erstreckt sich über die gesamte Länge dieser Türöffnung ein Kassettengehäuse 5, in dem ein flexibles Beschattungsgebilde 8 in Form einer Rollobahn auf einer Wickelwelle 9 auf- und abwickelbar gehalten ist. Die Wickelwelle 9 ist in dem Kassettengehäuse 5 drehbar gelagert. Das Kassettengehäuse 5 ist türfest montiert. Vorteilhaft sind das Kassettengehäuse 5 wie auch übrige Teile der Beschattungsvorrichtung 3 unterhalb der Türbrüstung in fahrfertigem Endzustand des Personenkraftwagens durch eine Türinnenverkleidung verdeckt. Das Kassettengehäuse 5 bildet einen Schacht, der zur Seitenscheibe 2 hin nach oben einen Durchtritt aufweist, durch den hindurch das Beschattungsgebilde 8 nach oben ausgefahren werden kann, um die Seitenscheibe 2 zu beschatten. Auch der Durchtritt erstreckt sich über nahezu eine gesamte Länge des Kassettengehäuses 5.

Der Durchtritt ist durch einen Schließdeckel 7 verschließbar, der um eine Schwenkachse 13 relativ zu dem Kassettengehäuse 5 zwischen einer Öffnungsstellung und einer Schließstellung schwenkbeweglich gelagert ist. Der Schließdeckel 7 erstreckt sich über die gesamte Länge des Durchtritts und verschließt den Durchtritt in der Schließstellung. Die Schließstellung des Schließdeckels 7 ist anhand der Fig. 2, 5, 6, 7, 8, 9 gezeigt. Die Öffnungsstellung des Schließdeckels 7 ist anhand der Fig. 1 sowie der Fig. 3, 4 und 10 erkennbar. Zur schwenkbeweglichen Lagerung des Schließdeckels 7 um die Schwenkachse 13 sind Lagerelemente 14 im Bereich einer Oberseite des Kassettengehäuses 5 einerseits und im Bereich einer Unterseite des Schließdeckels 7 andererseits vorgesehen. Die Schwenkachse 13 erstreckt sich parallel zu einer Drehachse der Wickelwelle 9.

Das Beschattungsgebilde weist an seinem in Auszugrichtung vorderen Stirnendbereich ein formstabiles Auszugprofil 6 auf, das mit seinen gegenüberliegenden Stirnendbereichen in den türfesten Führungsschienen 4 längsverschiebbar geführt ist. Hierzu ist jeder Stirnendbereich des Auszugprofils 6 an einem Mitnehmer 11 befestigt, der in der jeweiligen Führungsschiene 4 längsverschiebbar geführt ist. Zur Längsverlagerung des jeweiligen Mitnehmers 11 in Fahrzeughochrichtung in der jeweiligen Führungsschiene 4 ist ein Antriebsübertragungsmittel 10, vorliegend in Form einer auch als Gewindewelle bezeichneten Flexwelle, vorgesehen. Anhand der Fig. 2 bis 10 ist der - von innen auf die Seitentür 1 gesehen - rechte Mitnehmer 11 sowie die rechte Flexwelle 10 dargestellt. In gleicher Weise ist der gegenüberliegende Stirnendbereich des Auszugprofils 6 geführt. Die beiden Antriebsübertragungsmittel 10 sind mittels einer Antriebseinheit, vorzugsweise mittels eines Elektromotors, in den Führungsschienen 4 angetrieben. Bei einer Aktivierung der Antriebseinheit werden die Antriebsübertragungsmittel 10 in den gegenüberliegenden Führungsschienen 4 synchron zueinander verschoben, wodurch das Auszugprofil 6 parallel zur Drehachse der Wickelwelle 9 nach oben und nach unten verlagert wird. Dadurch wird zwangsläufig das Beschattungsgebilde 8 je nach Bewegungsrichtung des Auszugprofils 6 ebenfalls von der Wickelwelle 9 abgewickelt und nach oben ausgezogen oder auf die Wickelwelle 9 aufgewickelt und nach unten abgesenkt.

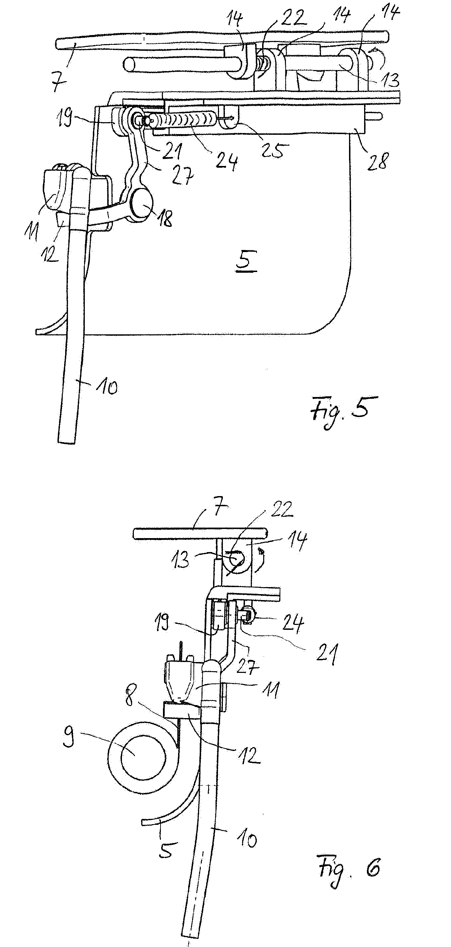

Die Beschattungsvorrichtung 3 weist eine mechanische Zwangssteuerung zum Öffnen und Schließen des Schließdeckels 7 auf in Abhängigkeit von einer Verlagerungsbewegung des Auszugprofils 6. Der Schließdeckel 7 wird durch eine Federeinrichtung 22 permanent in Richtung seiner Schließstellung beaufschlagt, wie anhand nicht näher bezeichneter Drehmomentpfeile in den Fig. 5 und 6 erkennbar ist. Die Federeinrichtung 22 stellt eine Schließfedereinrichtung dar, da sie auf den Schließdeckel 7 um die Schwenkachse 13 ein Drehmoment in Schließrichtung ausübt. Solange sich das flexible Flächengebilde 8 in seiner Schließstellung befindet, wird der Schließdeckel 7 demzufolge in seiner Schließstellung gemäß den Fig. 2, 5 bis 9 gehalten.

Dem Schließdeckel 7 ist eine Steuermechanik zugeordnet, die eine Zwangssteuerung des Schließdeckels 7 in seine Öffnungsstellung gemäß den Fig. 1, 3, 4 und 10 vornimmt, sobald die Mitnehmer 11 und damit das Auszugprofil 6 aus der Ruhestellung in dem Schacht des Kassettengehäuses 5 nach oben ausgefahren werden. Die Steuermechanik umfasst eine Umlenkvorrichtung 12, 18, 27 sowie einen Steuerschieber 19, der mittels eines Steuernockens 16 mit einer Steuerkulisse 15 an einer Unterseite des Schließdeckels 7 zusammenwirkt. Der Steuerschieber 19 ist in einem Führungskanal eines Führungsgehäuses 28 linearbeweglich geführt. Das Führungsgehäuse 28 ist fest mit dem Kassettengehäuse verbunden. Alternativ kann das Führungsgehäuse 28 auch an einer Türverkleidung befestigt und demzufolge türfest angeordnet sein. Eine Längsachse des Steuerschiebers 19, längs der der Steuerschieber 19 in dem Führungskanal des Führungsgehäuses 28 längsverschiebbar geführt ist, ist parallel zu der Schwenkachse 13 des Schließdeckels 7 sowie parallel zu der Drehachse der Wickelwelle 9 ausgerichtet. Alternativ kann der Steuerschieber in einer zumindest abschnittsweise gekrümmten Kulissenbahn geführt sein. Der Führungskanal ist in Abstand unterhalb der Schwenkachse 13 des Schließdeckels 7 positioniert. Der Steuernocken 16 ist fest mit dem Steuerschieber 19 verbunden, vorzugsweise einstückig an diesem an-geformt, und ragt durch einen Längsschlitz 17 in einer Oberseite des Kassettengehäuses 5 hin-durch und über die Oberseite des Kassettengehäuses nach oben ab. Der Steuernocken 16 bildet eine Anlagefläche im Bereich seiner Oberseite, die eine gekrümmte Anlaufschräge der Steuerkulisse 15 kontaktiert. Die Steuerkulisse 15 ragt von der Unterseite des Schließdeckels 7 aus nach unten ab.

Der Steuerschieber 19 weist einen zur Mitte des Kassettengehäuses 5 hin gerichteten Fortsatz 26 auf, der eine Führungsverlängerung für den Steuerschieber 19 bilden kann und/oder eine Verbindung zu einem weiteren Schieberabschnitt des Steuerschiebers bilden kann, der in nicht dargestellter Weise mit einem weiteren Kulissenabschnitt des Schließdeckels 7 zusammenwirken kann. Die Funktion dieses zweiten Schieberabschnitts sowie des zweiten Kulissenabschnitts ist identisch zu der anhand der Fig. 2 bis 10 dargestellten Funktion, so dass auf die nicht dargestellten Abschnitte an dieser Stelle nicht näher eingegangen werden muss.

Der Steuerschieber 19 weist an einem stirnseitigen Außenbereich, der der Führungsschiene 4 und demzufolge dem Antriebsübertragungsmittel 10 und dem Mitnehmer 11 zugewandt ist, eine Langlochführung 20 auf, über die mittels eines Gelenkpunkts 21 ein Hebelarm 27 eines Schwenkhebels angelenkt ist. Die Langlochführung 20 ist quer zu einer Linearbewegungsrichtung des Steuerschiebers 19 ausgerichtet. Der Schwenkhebel ist um eine Drehachse 18 schwenkbeweglich gelagert und weist neben dem Hebelarm 27 einen etwa rechtwinklig zu dem Hebelarm 27 von der Drehachse 18 aus seitlich nach außen ragenden Übertragungsarm 12 auf, der in eine Bewegungsbahn des Mitnehmers 11 hineinragt. Das Kassettengehäuse 5 ist im Bereich des Übertragungsarms 12 ausgespart, um eine begrenzte Schwenkbeweglichkeit des Übertragungsarms 12 zu ermöglichen. Wie anhand der Fig. 2 bis 6 erkennbar ist, weist der Übertragungsarm 12 einen rechtwinklig in die Bewegungsbahn des Mitnehmers 11 abgewinkelten Fortsatz auf. Die Lagerachse 18 ist parallel zu einer Gelenkachse des Gelenkpunkts 21 ausgerichtet, so dass der Schwenkhebel mit dem Hebelarm 27 und dem Übertragungsarm 12 in einer Schwenkebene schwenkbeweglich gelagert ist, die zumindest weitgehend parallel zu einer Außenwandung des Kassettengehäuses 5 verläuft. Der Schwenkhebel ist über die Lagerachse 18 an dem Kassettengehäuse 5 schwenkbeweglich gelagert.

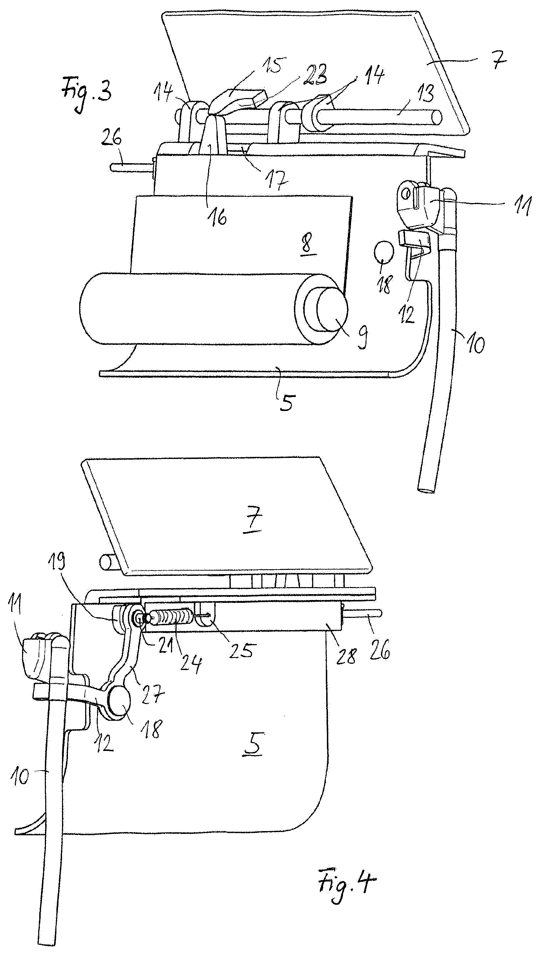

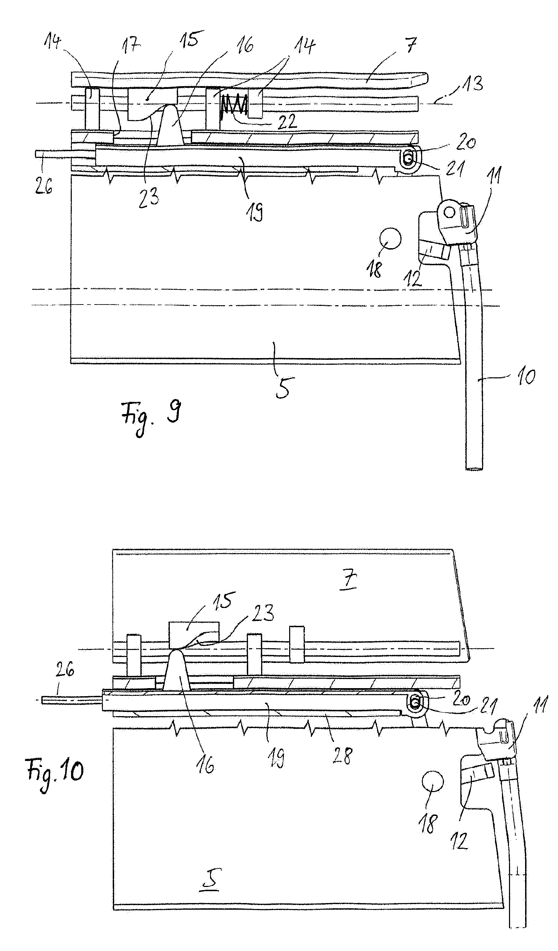

An dem Gelenkpunkt 21 greift eine als Zugfedereinheit 24 gestaltete Federeinheit 24 an, die als Schraubenzugfeder ausgeführt ist. Hierdurch wird auf den Hebelarm 27 ein Drehmoment um die Lagerachse 18 ausgeübt, das den Hebelarm 27 permanent gegen den Steuerschieber 19 drückt. Der Hebelarm 27 ist zwischen zwei Endstellungen in seiner Schwenkbeweglichkeit begrenzt. Die eine Endstellung ist anhand der Fig. 2, 5, 6, 7, 8, 9 und die andere Endstellung durch die Fig. 3, 4, 10 dargestellt. Letztere Endstellung definiert die Öffnungsstellung des Schließdeckels 7. Die erste Endstellung hingegen definiert die Schließstellung des Schließdeckels 7. In der die Öffnungsstellung des Schließdeckels 7 definierenden Endstellung liegt der Steuerschieber 19 über einen nicht näher bezeichneten, aber in Fig. 10 erkennbaren Anschlag axial an dem Führungsgehäuse des Führungskanals an. Die andere Endstellung des Schwenkhebels wird durch die Anlage des Übertragungsarms 12 an dem in der Ruhestellung befindlichen Mitnehmer 11 definiert. Denn der Stützfortsatz des Übertragungsarms 12 liegt im Bereich einer Unterseite des Mitnehmers 11 an diesem an, solange der Mitnehmer 11 und das Auszugprofil 6 sich in der Ruhestellung befinden.

Die als Zugfedereinheit 24 dienende Schraubenzugfeder befindet sich in beiden Endstellungen des Hebelarms 27 unter Vorspannung, so dass auf den Hebelarm 27 eine permanente Zugkraft ausgeübt wird. Hierzu ist die Schraubenzugfeder mit einem Federende an dem Gelenkpunkt 21 und mit einem gegenüberliegenden Federende an einem Halter 25 angelenkt, der mit dem Kassettengehäuse 5 fest verbunden ist.

Die Steuerkulisse 15 weist, wie anhand der Fig. 3 und 9, 10 dargestellt ist, im Bereich ihrer Unterseite eine bogenförmig oder S-förmig gekrümmte Anlaufschräge 23 auf, entlang der die Anlagefläche des Steuernockens 16 entlanggleitet, sobald der Steuerschieber 19 in dem Führungskanal des Führungsgehäuses 28 verschoben wird.

In der Ruhestellung des Beschattungsgebildes 8 und damit in der Ruhestellung des Mitnehmers 11 und des Auszugprofils 6 stützt sich der Übertragungsarm 12 von unten her an dem Mitnehmer 11 ab und hält den Steuerschieber 19 über den Hebelarm 27 und den Gelenkpunkt 21 sowie die Langlochführung 20 in einer Endstellung, in der der Steuernocken 16 gemäß Fig. 2 und 5 bis 9 an einem Talabschnitt der Anlaufschräge 23 der Steuerkulisse 15 anliegt. Die Schraubenzugfeder 24 ist in dieser Stellung maximal vorgespannt.

Sobald nun der Mitnehmer 11 mittels des Antriebsübertragungsmittels 10 nach oben bewegt wird, kommt der Übertragungsarm 12 frei, wodurch die Schraubenzugfeder 24 den Hebelarm 27 in Richtung des Halters 25 verschwenkt. Hierdurch wird zwangsläufig der Steuerschieber 19 mitgenommen, der in dem Führungskanal linearbewegt wird. Dabei gleitet die Anlagefläche des Steuernockens 16 von dem Talabschnitt der Anlaufschräge 23 über den Steigungsabschnitt bis zu einem Bergabschnitt der Steuerkulisse 15, wodurch zwangsläufig der Schließdeckel 7 nach oben in seine Öffnungsstellung verschwenkt wird. Der Steuernocken 16 wird während dieser Bewegung innerhalb des Längsschlitzes 17 verschoben. Sobald der Steuernocken 16 den Bergabschnitt der Anlaufschräge 23 erreicht hat, schlägt der Steuerschieber 19 an einer Stirnseite des Führungskanals axial an. Auch in dieser Endstellung des Steuerschiebers 19 übt die Schraubenzugfeder 24 noch eine Zugspannung auf den Hebelarm 27 aus, so dass der Steuerschieber 19 mit seinem Anschlag gegen die Stirnseite des Führungskanals gedrückt gehalten wird. Der Schließdeckel 7 verbleibt daher in seiner Öffnungsstellung, bis das Beschattungsgebilde 8 mittels des Auszugprofils 6 wieder nach unten verfahren wird und der Mitnehmer 11 wieder an dem Übertragungsarm 12 zur Anlage kommt und den Übertragungsarm 12 wieder nach unten mitnimmt. Das über den Mitnehmer 11 bei einer entsprechenden Abwärtsbewegung auf den Übertragungsarm 12 ausgeübte Drehmoment ist größer als das entgegengerichtet wirkende Drehmoment der Schraubenzugfeder 24, die auf den Hebelarm 27 wirkt, so dass der Hebelarm 27 gegen die Zugkraft der Schraubenzugfeder 24 wieder zurückverschwenkt wird, wodurch auch der Steuerschieber 19 wieder in seine ursprüngliche Ausgangslage zurückverschoben wird.

Die Langlochführung 20 dient dazu, einen Längenausgleich zwischen der Linearbeweglichkeit des Steuerschiebers 19 und der Schwenkbeweglichkeit des Hebelarms 27 zu bewirken.

Das Öffnen des Schließdeckels 7 mittels der beschriebenen Zwangsführung erfolgt gegen die Federkraft der Schließfedereinrichtung 22. Sobald der Steuerschieber 19 daher wieder zurückbewegt wird, drückt die Schließfedereinrichtung 22 den Schließdeckel 7 zwangsläufig wieder in die Schließstellung zurück, wobei die Anlaufschräge 23 und die Anlagefläche des Steuernockens 16 permanent miteinander in Kontakt bleiben.

## Patentansprüche

1. Beschattungsvorrichtung für eine Scheibe eines Kraftfahrzeugs mit einem Beschattungsgebilde (8), das zwischen einer abgesenkten Ruhestellung und einer ausgefahrenen Beschattungsstellung in in betriebsfertig montiertem Zustand fahrzeugfesten seitlichen Führungsschienen (4) mithilfe von in den Führungsschienen (4) beweglich geführten Antriebsübertragungsmitteln (10) verlagerbar ist, wobei das Beschattungsgebilde (8) durch einen Durchtritt hindurch in einen in betriebsfertig montiertem Zustand fahrzeugfesten Aufnahmeschacht absenkbar ist, wobei der Durchtritt mittels eines schwenkbeweglich gelagerten Schließdeckels (7) verschließbar ist, und wobei eine Steuermechanik vorgesehen ist, um den Schließdeckel (7) abhängig von einer Bewegung der Antriebsübertragungsmittel (10) in eine Öffnungsstellung zu überführen, **dadurch gekennzeichnet, dass** die Steuermechanik einen Steuerschieber (19) aufweist, der quer zur Verlagerungsrichtung des Beschattungsgebildes (8) beweglich gelagert ist und mit dem Schließdeckel (7) in mechanischer Wirkverbindung steht, und dass die Steuermechanik eine Umlenkeinrichtung umfasst, die den Steuerschieber (19) bei einer Bewegung der Antriebsübertragungsmittel (10) derart mit wenigstens einem Antriebsübertragungsmittel (10) koppelt, dass der Steuerschieber (19) bei einer Bewegung der Antriebsübertragungsmittel (10) aus der Ruhestellung des Beschattungsgebildes (8) in Richtung der Beschattungsstellung den Schließdeckel (7) in die Öffnungsstellung überführt.

2. Beschattungsvorrichtung nach Anspruch 1, **dadurch gekennzeichnet, dass** die Steuermechanik eine Federeinheit (24) umfasst, die auf den Steuerschieber (19) eine permanente Federkraft in Richtung einer Endstellung ausübt, die den Schließdeckel (7) in seiner Öffnungsstellung hält.

3. Beschattungsvorrichtung nach Anspruch 1 oder 2, **dadurch gekennzeichnet, dass** dem Schließdeckel (7) eine Schließfedereinrichtung (22) zugeordnet ist, die auf den Schließdeckel (7) ein permanentes Drehmoment in Schließrichtung ausübt.

4. Beschattungsvorrichtung nach Anspruch 1, **dadurch gekennzeichnet, dass** die Umlenkeinrichtung ein durch einen Mitnehmer (11) des Antriebsübertragungsmittels betätigbares Steuerglied (12, 27) aufweist, das mit dem Steuerschieber (19) gekoppelt ist.

5. Beschattungsvorrichtung nach Anspruch 4, **dadurch gekennzeichnet, dass** das Steuerglied als Schwenkhebel (12, 27, 18) ausgeführt ist, der mittels eines Längenausgleichselements (20) mit dem Steuerschieber (19) gekoppelt ist.

6. Beschattungsvorrichtung nach Anspruch 5, **dadurch gekennzeichnet, dass** das Längenausgleichselement als Langlochführung (20) gestaltet ist.

7. Beschattungsvorrichtung nach Anspruch 2, **dadurch gekennzeichnet, dass** die Federeinheit (24) als Schraubenzugfeder gestaltet ist.

8. Beschattungsvorrichtung nach Anspruch 7, **dadurch gekennzeichnet, dass** die Schraubenzugfeder an dem Steuerglied (12, 27) angreift.

9. Beschattungsvorrichtung nach einem der vorhergehenden Ansprüche, **dadurch gekennzeichnet, dass** der Steuerschieber (19) in einem Führungskanal linearbeweglich gelagert ist, der ortsfest zu dem Aufnahmeschacht angeordnet ist.

10. Beschattungsvorrichtung nach einem der vorhergehenden Ansprüche, **dadurch gekennzeichnet, dass** der Steuerschieber (19) mit einer an dem Schließdeckel (7) angeordneten Steuerkulisse (15) zusammenwirkt, um den Schließdeckel (7) aus einer Schließstellung in die Öffnungsstellung zu überführen.

11. Beschattungsvorrichtung nach einem der vorhergehenden Ansprüche, **dadurch gekennzeichnet, dass** der Steuerschieber (19) parallel zu einer Drehachse des Schließdeckels (7) linearbeweglich gelagert ist.

12. Beschattungsvorrichtung nach Anspruch 10 oder 11, **dadurch gekennzeichnet, dass** die Steuerkulisse (15) eine Anlaufschräge (23) aufweist, mit der eine Anlagefläche des Steuerschiebers (19) zusammenwirkt.

13. Beschattungsvorrichtung nach Anspruch 12, **dadurch gekennzeichnet, dass** die Anlaufschräge (23) zu einer Bewegungsbahn des Steuerschiebers (19) geneigt verläuft.

14. Beschattungsvorrichtung nach einem der Ansprüche 10 bis 13, **dadurch gekennzeichnet, dass** die Steuerkulisse (15) zumindest weitgehend mittig zwischen gegenüberliegenden Seitenrandbereichen des Schließdeckels (7) angeordnet ist.
